# EUROPÄISCHE PATENTSCHRIFT

(11) **EP 1 040 034 B1**
(45) Veröffentlichungstag und Bekanntmachung des Hinweises auf die Patenterteilung: **29.06.2005**
(21) Anmeldenummer: 98961197.5
(22) Anmeldetag: 13.11.1998
(51) Int. Cl.: B60T 8/00

(54) **VERFAHREN UND VORRICHTUNG ZUR VERBESSERUNG DER FAHREIGENSCHAFT EINES FAHRZEUGS BEI GEBREMSTER KURVENFAHRT**
METHOD AND DEVICE FOR IMPROVING THE HANDLING CHARACTERISTICS OF A VEHICLE WHILE BRAKING DURING CORNERING
PROCEDE ET DISPOSITIF POUR AMELIORER LA TENUE DE ROUTE D'UN VEHICULE LORS DE LA NEGOCIATION D'UN VIRAGE AVEC FREINAGE

(30) Priorität: 20.12.1997 DE 19757014; 06.05.1998 DE 19820107
(43) Veröffentlichungstag der Anmeldung: 04.10.2000
(73) Patentinhaber: Continental Teves AG & Co. oHG, 60488 Frankfurt (DE)
(72) Erfinder: WOYWOD, Jürgen, D-64542 Mörfelden (DE); WALDBAUER, Dirk, D-65817 Eppstein (DE); ROLL, Georg, D-63150 Heusenstamm (DE)
(86) Internationale Anmeldenummer: PCT/EP1998/007287
(87) Internationale Veröffentlichungsnummer: WO 1999/032338

(56) Entgegenhaltungen:
- EP-A- 0 771 707
- DE-A- 4 222 958
- DE-A- 19 522 634
- DE-A- 19 703 668

## Beschreibung

Die nachfolgende Erfindung betrifft ein Verfahren und eine Vorrichtung zur Verbesserung der Fahreigenschaft eines Fahrzeugs bei gebremster Kurvenfahrt gemäß den Oberbegriffen der unabhängigen Ansprüche.

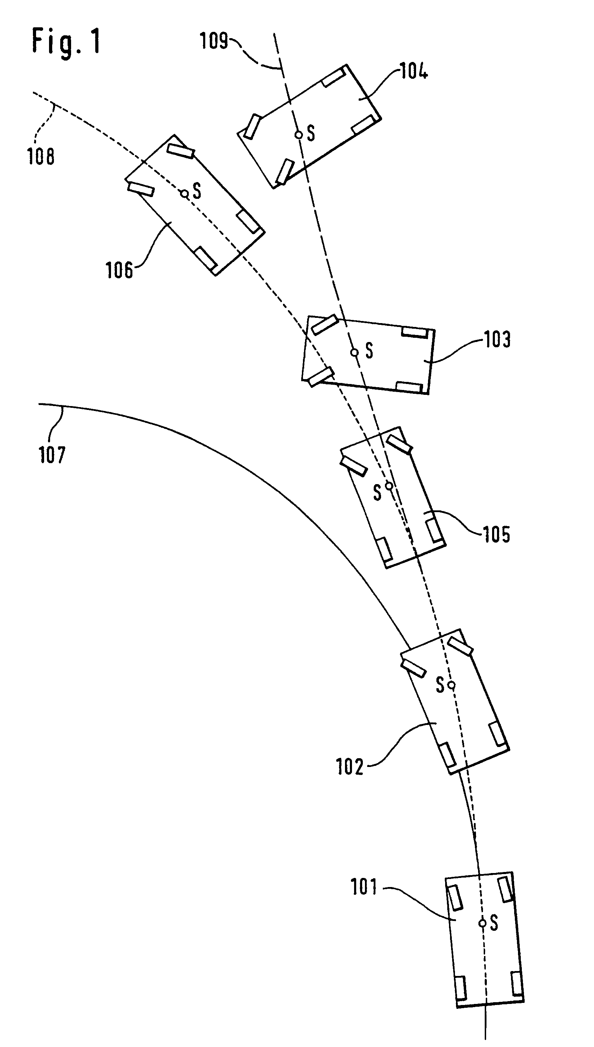

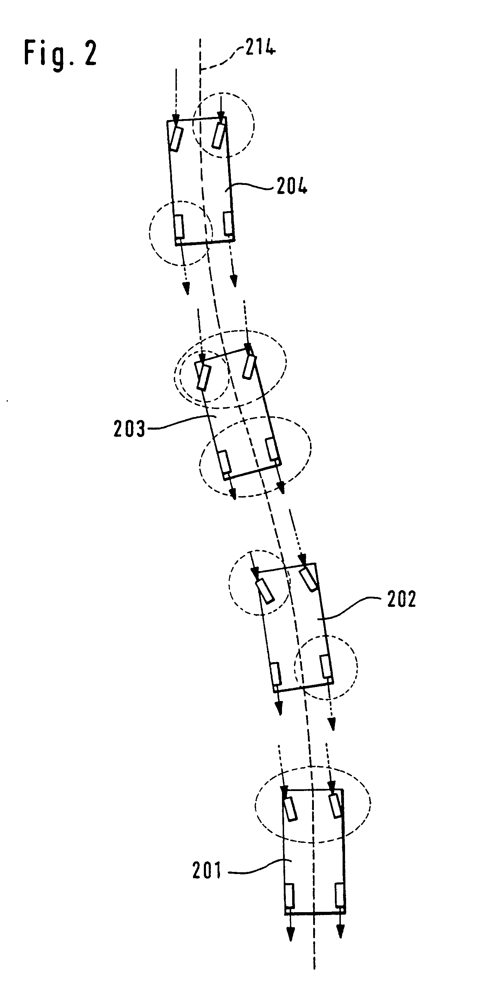

Gebremste Kurvenfahrten stellen fahrdynamisch eine besondere Herausforderung dar, weil zum einen verschiedene Kräfte abzufangen sind (Trägheitskraft des schiebenden Fahrzeugs, Zentrifugalkraft des sich auf einer Kreisbahn befindenden Fahrzeugs) und weil zum anderen die Randbedingungen, unter denen eine Bremsung stattfindet, zeitlich veränderlich sind. Nachfolgend wird bezugnehmend auf die Figuren 1 und 2 die zugrundeliegende Problematik erläutert.

Figur 1 zeigt eine Situation, in der ein Fahrzeug beispielsweise aufgrund überhöhter Geschwindigkeit einen gewünschten Idealkurs 107 mit vergleichsweise engen Kurvenradius nicht einhalten kann, da die Fliehkraft, die das Fahrzeug aus der Kreisbahn 107 drängt, die Summe der Seitenführungskräfte der Räder überschreitet. Für den Fahrer stellt sich diese Situation in Position 102 als Untersteuern dar (weil dem gewünschten Kurz 107 nur unzureichend gefolgt wird). Der Fahrer ist deshalb bestrebt, noch stärker zu lenken (stärkerer Einschlag der Vorderräder), was aber zu einem noch stärkeren Untersteuerverhalten führt. Dies kann schließlich dazu führen, daß das Fahrzeug selbst zwar übersteuert (stark kurveneinwärts dreht), sich aber auf einem deutlich untersteuerten Kurs 109 bewegt (Positionen 103 und 104). Wünschenswerter wäre es hier, wenn zumindest das Fahrzeug dem etwas weniger untersteuernden Kurs 108 folgen würde und insbesondere nicht eindreht, so daß sich die Position 106 ergibt.

Mit den bisherigen Verfahren zur Bremsoptimierung kann ein solches Verhalten jedoch nicht eingestellt werden. Praktisch alle modernen Fahrzeuge verfügen über ABS (Antiblokkiersystem), eine radindividuelle Regelung, die den Bremsdruck an einer Radbremse nach Maßgabe des Laufverhaltens dieses Rades beeinflußt. Hiermit können aber insbesondere vorteilhaft wirkende Momente um die Hochachse des Fahrzeugs nicht erzeugt werden, da die Räder jeweils nur individuell, aber nicht in größerem Zusammenhang angesteuert werden.

Insbesondere ist zu beobachten, daß ABS das Untersteuerverhalten fördert. Durch die Fliehkraft entsteht nämlich ein Rollmoment (um die Längsachse) des Fahrzeugs, so daß die kurvenäußeren Räder stärker belastet sind und damit weniger zum Blockieren neigen. Dadurch werden sie später in den Schlupf geraten, so daß an den kurvenäußeren Rädern eine stärkere und an den kurveninneren Rädern eine schwächere Bremskraft entsteht, die insgesamt zu einem kurvenauswärts drehenden Giermoment (um die Hochachse) des Fahrzeugs führen, das die Untersteuerneigung verstärkt. eine stärkere und an den kurveninneren Rädern eine schwächere Bremskraft entsteht, die insgesamt zu einem kurvenauswärts drehenden Giermoment (um die Hochachse) des Fahrzeugs führen, das die Untersteuerneigung verstärkt.
Aufgabe der Erfindung ist es, ein Verfahren und eine Vorrichtung zur Verbesserung der Fahreigenschaften eines Fahrzeugs bei gebremster Kurvenfahrt anzugeben, die situationsangepaßt eine günstige Bremsunterstützung ermöglichen.

Insbesondere sollen das Verfahren und die Vorrichtung an die zeitvariablen Randbedingungen angepaßt sein.

Vorzugsweise sollen sie einfach insbesondere ohne erhöhten Sensoraufwand implementierbar sein. Aus der EP o 771 707 A1 ist eine Einrichtung bekannt, die eine Drehung des Fahrzeugs über den Einsatz eines zusätzlichen Giersensors ermittelt und auswertet.

Diese Aufgabe wird mit den Merkmalen der unabhängigen Ansprüche gelöst, abhängige Ansprüche sind auf bevorzugte Ausführungsformen der Erfindung gerichtet.

Figur 2 zeigt einen Spurwechsel, der beispielsweise gewünscht sein kann, wenn plötzlich einem Hindernis (Kind auf der Fahrbahn) auszuweichen ist. 214 ist der gewünschte Kurs, und das Fahrzeug bewegt sich längs der Positionen 201, 202, 203 und 204. Hier werden verschiedene Situationen nacheinander durchlaufen. Zu Beginn des Einlenkens kann die bezugnehmend auf Figur 1 geschilderte Situation auftreten zur Erhöhung der Stabilität des Fahrzeugs, kann es demnach wünschenswert sein, daß im Übergang von 202 nach 203 andere Maßnahmen getroffen werden als im Übergang von 201 nach 202. Im Punkt 203 wird angenommen, daß einem Hindernis ausgewichen werden konnte und auf eine versetzte Spur eingelenkt werden soll. Es setzt deshalb ein Gegenlenkvorgang ein. Somit wird in die andere Richtung als vorher gelenkt. Zwar stellen sich a priori hier spiegelbildlich die gleichen Überlegungen wie vorher. Gleichwohl ist zusätzlich zu berücksichtigen, daß die Dynamik der zweiten Kurve (nach rechts in Figur 2, Übergang von 203 nach 204) dynamisch noch beeinflußt ist durch die "Vorgeschichte", nämlich die plötzliche Lenkung nach links (Übergang von 201 über 202 nach 203). Eine geeignete Steuerung sollte all den oben genannten Beobachtungen Rechnung tragen.

Erfindungsgemäß wird deshalb vorgeschlagen, eine gebremste Kurvenfahrt zu erkennen und zeitlich zu strukturieren. Hierbei werden nach Maßgabe des Zeitablaufs während der Kurvenfahrt situationsangepaßt günstige Maßnahmen getroffen. Diese Maßnahmen werden insbesondere dann getroffen, wenn Instabilitäten erkennbar werden, beispielsweise tiefe Schlupfeinläufe an einem oder mehreren Rädern. Es werden dann, wenn die instabile, gebremste Kurvenfahrt über eine Zeitspanne hinweg andauert, die eine Schwellenzeitspanne erreicht, der Bremsdruck eines oder mehrerer Radbremsen im Hinblick auf die Optimierung der Fahrzeugstabilität modifiziert.

Außerdem kann in der Zeitspanne vor Erreichen der Schwellenzeitspanne bei instabiler Kurvenfahrt die Lenkfähigkeit des Fahrzeugs durch geeignete Maßnahmen erhöht werden.

Die verschiedenen Betriebszustände, insbesondere die Kurvenfahrten und die Instabilitäten, können in einer Ausführungsform bezugnehmend auf die Radsensoren und insbesondere ohne Verwendung eines Lenkwinkelsensors erkannt werden.

Nachfolgend werden bezugnehmend auf die Zeichnungen einzelne erfindungsgemäße Ausführungsformen beschrieben. Es zeigen:
- Figur 1: ein Beispiel einer untersteuerten, instabilen Fahrt,
- Figur 2: ein Beispiel eines Spurwechsels,
- Figur 3: in Kombination mehrere erfindungsgemäße Ausführungsformen,
- Figur 4: weitere erfindungsgemäße Ausführungsformen,
- Figur 5: schematisch eine Komponente einer ABS-Regelung, und
- Figur 6: erfindungsgemäß ausgewertete bzw. erzeugte Signalfolgen.

Bevor bezugnehmend auf die Zeichnungen einzelne erfindungsgemäße Ausführungsformen beschrieben werden, wird kurz auf die verwendete Terminologie eingegangen. Ein wichtiger Aspekt dieser Anmeldung ist die Steuerung der Bremsdrücke in den einzelnen Radbremsen. Hierzu werden verschiedene Strategien unabhängig voneinander oder kombiniert miteinander vorgeschlagen. Wenn von "Beeinflussung des Bremsdrucks" bzw. einer "Beeinflussungsvorrichtung" die Rede ist, soll damit eine radindividuelle Regelung des Bremsdrucks an einem Rad, etwa nach Art von ABS, angesprochen sein. Wenn die "Modifizierung des Bremsdrucks" bzw. "eine Modifizierungseinrichtung" angesprochen ist, wird die Gestaltung des Bremsdrucks im Hinblick auf Stabilitätsverbesserung bezeichnet. Wenn von der "Veränderung des Bremsdrucks" gesprochen wird, wird die Bremsdruckgestaltung im Hinblick auf Optimierung der Lenkbarkeit des Fahrzeugs bezeichnet. Wenn schließlich die "Bremsdruckabwandlung" angesprochen ist, ist damit die Bremsdruckgestaltung im Hinblick auf komplexere Aufgaben, beispielsweise die vorteilhafte Bremsunterstützung bei einem plötzlichen Spurwechsel, gemeint. Das Zusammenwirken der eben angesprochenen Strategien wird weiter unten erläutert.

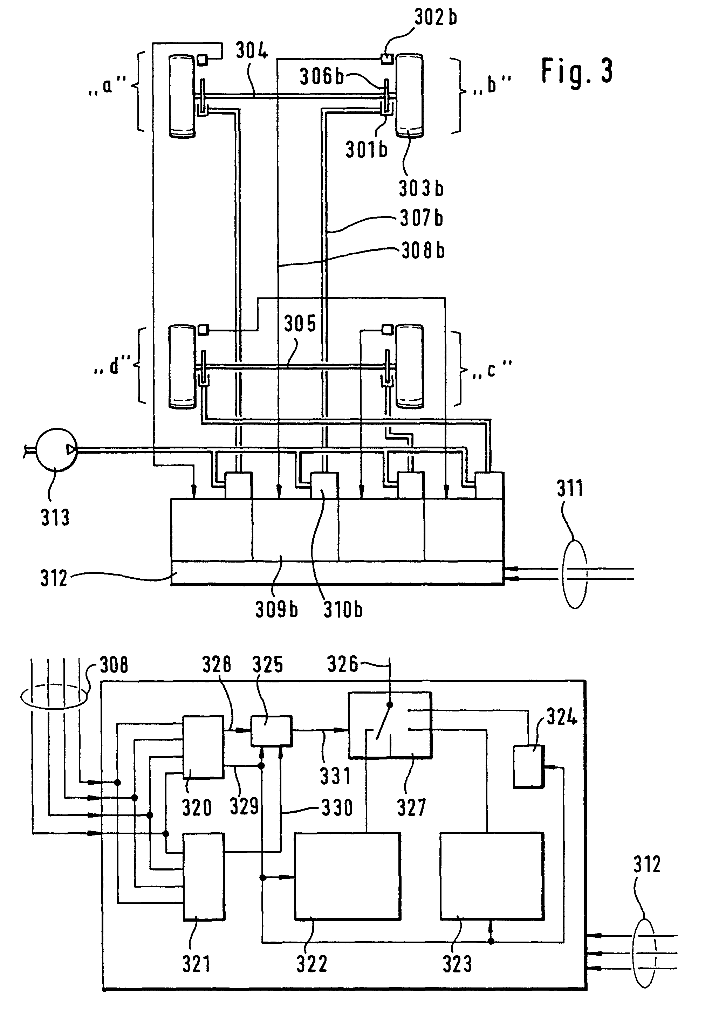

Figur 3 zeigt schematisch mehrere erfindungsgemäße Ausführungsformen. Oben in Figur 3 sind vier Räder 303a-d eines Fahrzeugs gezeigt. Der Index "a" bezeichnet dabei das Rad links vorne, der Index "b" das Rad rechts vorne, der Index "c" das Rad rechts hinten und der Index "d" das Rad links hinten. 304 ist die Vorderachse mit den Rädern 303a und 303b, 305 die Hinterachse mit den Rädern 303c und 303d. An jedem der Räder 303a-d ist je ein Radsensor 302a-d vorgesehen. Jeweils über Signalleitungen 308a-d werden diese Signale einer elektronischen Komponente 309a-d zugeführt. Jedes Rad 303a-d weist außerdem eine Radbremse 301a-d, 306a-d auf. Diese Bremsen werden hydraulisch betrieben und empfangen unter Druck stehendes Hydraulikfluid über Hydraulikleitungen 307a-d. Der Bremsdruck wird über einen Ventilblock 310b eingestellt, wobei der Ventilblock 310b durch elektrische Signale angesteuert wird, die in der elektronischen Schaltung 309b erzeugt werden.

Die soeben für das Rad rechts vorne beschriebenen Komponenten mit Index "b" finden sich in gleicher Weise für die übrigen Räder.

Durch die Komponente 309a-d sind Beeinflussungseinrichtungen bezeichnet, die den Bremsdruck in einem Rad individuell einstellen. Beobachtet wird das Laufverhalten eines Rades anhand des vom jeweiligen Radsensor 302 abgegebenen Signals (Leitung 308). Nach Maßgabe des empfangenden Signals werden Ansteuersignale für die Ventile im Ventilblock 310 erzeugt. Dadurch wird radindividuell ein Blockieren des Rades verhindert. Es kann sich somit beispielsweise um ABS handeln.

313 symbolisiert eine Hydraulikpumpe zur Bereitstellung von unter Druck stehendem Hydraulikfluid. Nicht gezeigt ist ein Reservoir für Hydraulikfluid, das das zurücklaufende Fluid aufnimmt.

Die elektronische Steuerung/Regelung kann eine gemeinsame Komponente 312 aufweisen, die gemeinsame Aufgaben wahrnimmt, beispielsweise Empfangen weiterer Eingangssignale 311, Signalaufbereitung, Koordination und ähnliches.

Im unteren Teil der Figur 3 sind in Kombination mehrere erfindungsgemäße Ausführungsformen dargestellt.

320 ist eine Erkennungseinrichtung zum Erkennen einer Kurvenfahrt und der Kurvenrichtung. Sie kann so ausgelegt sein, daß sie die Kurvenfahrt selbst und die Kurvenrichtung (beispielsweise anhand der Laufverhalten der einzelnen Räder) erkennt. Somit kann sie beispielsweise die Signale der einzelnen Radsensoren 302a-d über Leitungen 308a-d empfangen. Ihr können aber auch andere, gegebenenfalls schon aufbereitete Signale zugeführt werden. Die Erkennungseinrichtung 320 kann außerdem so ausgelegt sein, daß sie zwei Signale erzeugt, nämlich eines (328), das qualitativ die Kurvenfahrt anzeigt, und ein anderes (329), das im Falle der Kurvenfahrt die Kurvenrichtung angibt.

Außerdem ist eine Überprüfungsvorrichtung 321 vorgesehen, die den Fahrzustand des Fahrzeugs daraufhin überprüft, ob eine Instabilität vorliegt. Da auch dieser Zustand an dem Laufverhalten der Räder erkannt werden kann, kann auch diese Überprüfungseinrichtung die Radsignale 308 empfangen.

Außerdem ist eine Einrichtung 325 vorgesehen, die den zeitlichen Verlauf bewertet. Insbesondere überprüft sie, ob die instabile, gebremste Kurvenfahrt über eine bestimmte bzw. bestimmbare Zeitspanne hinweg, die eine Schwellenzeitspanne erreicht, andauert.

Wenn dies der Fall ist, wird eine Bremsdruckmodifizierung veranlaßt. Diese Bremsdruckmodifizierung erfolgt stabilitätsorientiert und kann insbesondere so erfolgen, daß der Bremsdruck an zumindest einem kurveninnenseitigen Rad abgesenkt und/oder an zumindest einem kurvenaußenseitigen Rad angehoben wird. Vorzugsweise wird der Bremsdruck kurveninnenseitig abgesenkt. Dadurch entstehen stärkere Bremskräfte kurvenaußen, so daß ein der Eindrehtendenz des Fahrzeugs entgegenwirkendes kurvenauswärts drehendes Giermoment (um die Hochachse) erzeugt wird. Dadurch wird die ungünstige Entwicklung in Figur 1 von Position 102 nach 103 wahrscheinlicher vermieden, und das Fahrzeug folgt wahrscheinlicher einer weniger ungünstigen Linie 108 über Positionen 105 und 106.

Figur 3 zeigt unter Bezugsziffer 322 eine Modifizierungseinrichtung, die zur Modifizierung der Bremsdrücke zur Erhöhung der Fahrzeugstabilität verwendet wird, wenn während der gebremsten Kurvenfahrt eine Instabilität über eine Zeitspanne hinweg erkannt wird, die die Schwellenzeitspanne erreicht.

In der Ausführungsform nach Figur 3 ist eine mögliche Option dahingehend dargestellt, daß ein Umschalter 327 aus verschiedenen Bremsunterstützungsstrategien nach Maßgabe der Einrichtung 325 eine auswählt. Der Umschalter 327 empfängt verschiedene Eingangssignale, die jeweils die Modifizierung, Veränderung oder Abwandlung des Bremsdrucks betreffen können. Über Ausgangsleitung 326 werden die dann gewonnenen Signale weitergeleitet.

Weiterhin als Option anzusehen ist es, daß die Signale 326 nicht direkt auf die Bremsen einwirken, sondern der Veränderung der für die Vornahme der Bremsdruckbeinflussung herangezogenen Schwellenwerte dienen. So können beispielsweise die ABS-Schwellenwerte durch die Modifizierungseinrichtung 322 modifiziert werden. Die Leitung 326 kann mehrere parallele Signalleitungen aufweisen. Der Umschalter 327 kann eine Neutralstellung aufweisen, in der über Leitung 326 keine Signale ausgegeben werden.

In einer weiteren Ausführungsform kann vor der Modifizierung des Bremsdrucks der Bremse eines oder mehrerer Räder der Bremsdruck eines oder mehrerer Räder verändert werden.

Dies geschieht dann vor Ablauf der genannten Schwellenzeitspanne. Bis zum Erreichen dieser Schwellenzeitspanne kann abermals, gesteuert durch die Einrichtung 325, der Umschalter 327 den Ausgang einer Veränderungseinrichtung 323 wählen. Die Veränderungseinrichtung 323 führt zu Bremsdruckveränderungen, die die Lenkfähigkeit eines Fahrzeugs begünstigen. Insbesondere kann, wie schon oben erwähnt, dem durch ABS erzeugten kurvenauswärtsdrehenden Giermoment (um die Hochachse) entgegengewirkt werden, so daß das Fahrzeug auf einen engeren Kurs gezwungen wird (Kurs 108 anstatt Kurs 109 in Figur 1). Insbesondere kann der Bremsdruck kurvenaußenseitig abgesenkt werden. Gegebenenfalls kann zusätzlich oder statt dessen der Bremsdruck kurveninnenseitig angehoben werden.

Insgesamt kann somit ein Bremsmanöver in einer Kurve aus drei Phasen bestehen:
1. Verzögerungsoptimierte Bremsung unter ABS (in Figur 1 bis zur Position 101) durch radindividuelle Beeinflussung der Bremsdrücke an den einzelnen Radbremsen,
2. lenkoptimierte Bremsdruckveränderung in einer Zeitspanne vor Ablauf einer Schwellenzeitspanne (beispielsweise bis zum Punkt 105 in Figur 1) durch Bremsdruckabsenkung außen, und
3. stabilitätsoptimierte Bremsdruckmodifikation ab Erreichen der Schwellenzeitspanne beispielsweise durch Bremsdruckabsenkung kurveninnen oder an der Hinterachse (ab Position 105 in Figur 1), um ein Ausbrechen des Fahrzeugs zu verhindern.

Die unter 2. und 3. besprochenen Maßnahmen werden getroffen, wenn ein instabiles Fahrzeugverhalten erkennbar wird. Wenn dies nicht erkennbar ist, kann es bei der reinen ABS-Bremsung bleiben. Ob eine eigenständig unterscheidbare Phase einer reinen ABS-Bremsung gemäß obigem Punkt 1. erkennbar wird, hängt davon ab, ob bzw. wie schnell der Fahrzustand des Fahrzeugs bei der Überprüfung als instabil erkannt wird. Wird er sofort als instabil erkannt, kann, wie schon erwähnt, zunächst lenkoptimiert der Bremsdruck verändert und danach stabilitätsorientiert der Bremsdruck modifiziert werden.

Auch die lenkoptimierte Bremsdruckveränderung kann durch Veränderung der ABS-Schwellenwerte folgen.

Grundsätzliche Bremsdruckmodifizierungen zur Erhöhung der Fahrstabilität in einer Kurve umfassen einzeln oder in Kombination miteinander die sensitive Bremsung des kurveninneren Vorderrads (geringer Bremsdruck) und die kräftige Bremsung des kurvenäußeren Vorderrads (mit hohem Bremsdruck). Weitere Maßnahmen sind beispielsweise der Abgang von Select-low-Prinzip, demgemäß an der Hinterachse der niedrigere von den beiden sich ansonsten ergebenden Bremsdrücken ausgewählt wird. Vielmehr wird ein leichter Druckanstieg am kurvenäußern Hinterrad herbeigeführt.

Zur Erhöhung der Lenkfähigkeit können die beiden Vorderräder sensitiv geregelt werden (geringerer Bremsdruck).

Da sowohl die Modifizierungseinrichtung 322 als auch die Veränderungseinrichtung 323 richtungsabhängige Maßnahmen treffen, empfangen sie in der gezeigten Ausführungsform das Signal 329 aus der Erkennungseinrichtung 320, das die Kurvenrichtung (links/rechts) angibt. Auch die Einrichtung 325 kann für eine weiter unten beschriebene Ausführungsform das Richtungssignal 329 neben dem qualitativen Signal 328 (Kurve Ja/Nein) empfangen. Das Signal 330 von der Überprüfungseinrichtung 321 zeigt an, daß eine Bremsung im instabilen Zustand vorliegt. Das Signal 330 dient der Steuerung des Umschalters 327. 324 ist eine Abwandlungseinrichtung, deren Wirkungsweise später erläutert wird.

Die bezugnehmend auf Figur 3, untere Hälfte, beschriebenen Einrichtungen können weitere Signale 312 empfangen, beispielsweise die Fahrzeugreferenzgeschwindigkeit, einen den Reibwert (zwischen Rad und Fahrbahn) betreffenden Wert, und ähnliches.

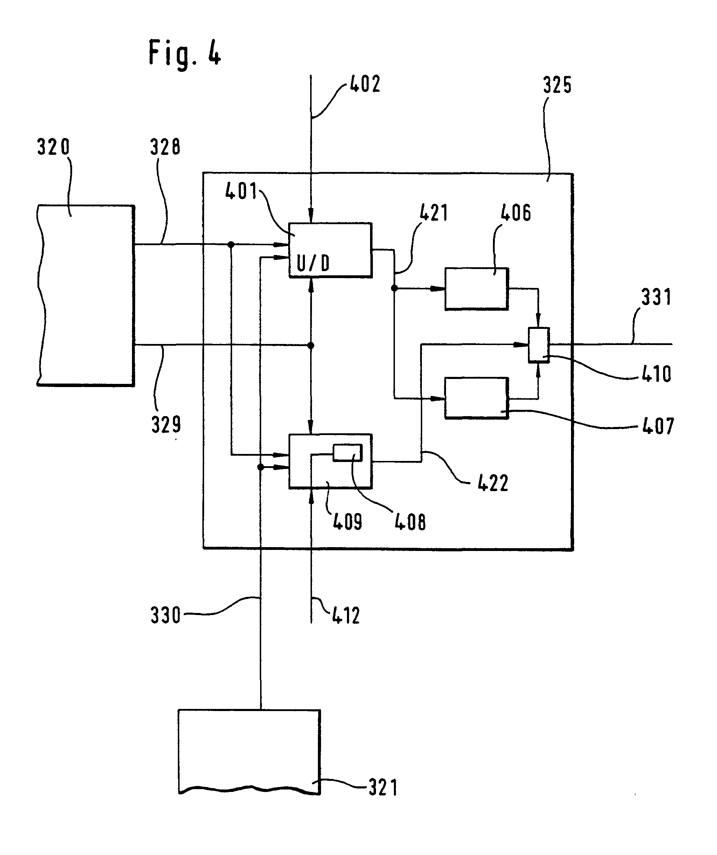

In Figur 4 ist vor allem eine Ausführungsform der Bestimmungseinrichtung 325 gezeigt. Unter anderem empfängt die Bestimmungseinrichtung das qualitative Kurvensignal 328, das Richtungssignal 329, das die Instabilität anzeigende Signal 330 sowie ein die ABS-Regelungszyklen anzeigendes Signal 402. Die Bestimmungseinrichtung 325 kann einen Zähler 401 aufweisen, der beispielsweise so ausgelegt sein kann, daß mit ihm das Erreichen der Schwellenzeitspanne für linksseitige und rechtsseitige Kurven erkannt werden kann. Es kann sich beispielsweise um einen Aufwärts/Abwärts-Zähler handeln, der um einen Ruhezählerstand herum nach Maßgabe des Kurvenrichtungssignals 329 zählt.

Der Zählerstand auf Leitung 421 wird mit Schwellenwerten 406, 407, die um den Ruhezählerstand herum gruppiert sind, verglichen. Der Zähler 401 empfängt demnach das qualitative Kurvensignal 328 und das die Instabilität anzeigende Signal 330 als qualitative "enable"-Signale. Wenn ihre Werte auf eine instabile Kurve hindeuten, zählt der Zähler nach Maßgabe des Kurvenrichtungssignals 329 die ABS-Zyklen auf Leitung 402 ausgehend vom zuletzt vorliegenden Zählerstand, beispielsweise dem Ruhezählerstand. Vorzugsweise ist der Ruhezählerstand Null, der eine Schwellenwert kleiner als Null und der andere Schwellenwert größer als Null. Je einer von ihnen ist in der Vergleichseinrichtung 406 bzw. 407 gespeichert. Sie können dort fest vorliegen oder abermals variabel gegeben sein, beispielsweise nach Maßgabe des Reibwerts (je niedriger der Reibwert, desto näher am Ruhezählerstand).

In den Vergleichern 406, 407 wird der Zählerstand auf der gegebenenfalls mehradrigen Leitung 421 mit den jeweiligen Schwellenwerten verglichen. Durch geeignetes Setzen der Schwellen/Zählerstände in den Vergleichern 406, 407 kann somit die Schwellenzeitdauer bestimmt werden. In einer Koordinationseinrichtung 410 werden die Ausgaben der Vergleiche 406, 407 zu einem Signal koordiniert, das den Umschalter 327 geeignet betätigt bzw. allgemein die geeignete Bremsunterstützungsstrategie auslöst.

Der Zähler 401 kann so ausgelegt sein, daß er bis zu Grenzwerten herauf- bzw. heruntergezählt werden kann, wobei der obere Grenzwert über dem oberen Schwellenwert und der untere Grenzwert unter dem unteren Schwellenwert liegen. Außerdem kann der Zähler so ausgelegt sein, daß dann, wenn keine instabile Kurvenbremsung mehr vorliegt (beispielsweise nur noch Bremsung in der Kurve, aber stabil), der Zählerstand schrittweise auf den Ruhezählerstand zurückgeführt wird.

Dadurch ergibt sich eine Abklingfunktion, die dazu führt, daß dann, wenn vorher (wegen Überschreitung des oberen bzw. des unteren Grenzwerts) die stabilitätsorientierte Bremsdruckmodifizierung eingeschaltet war, diese Modifizierung noch etwas nachwirkt. Die Dauer der Nachwirkung hängt vom Unterschied zwischen Grenzwert und Schwellenwert ab. Bei weiterer Rückführung des Zählers auf den Ruhezählerstand sprechen beide Vergleicher 406, 407 nicht mehr an, und der Umschalter kann beispielsweise auf eine lenkoptimierende Position oder Neutralposition (verzögerungsoptimiert, z.B. ABS) gestellt werden.

Nachfolgend wird die Situation betrachtet, daß entsprechend Figur 2 ein Spurwechsel stattfindet. Dieser ist dadurch gekennzeichnet, daß auf das schnelle Lenken in die eine Richtung ein plötzliches Gegenlenken in die andere Richtung erfolgt. Grundsätzlich können hier spiegelbildlich die gleichen Maßnahmen wie beim ersten Lenkvorgang getroffen werden. Lediglich die Kurvenaußen- und -innenseite werden vertauscht. Vorzugsweise ist sicherzustellen, daß auch beim Gegenlenken zunächst eine Phase der Lenkoptimierung und danach eine Phase der Stabilitätsoptimierung aufeinander folgen. Dies kann mit der schon beschriebenen Ausführungsform des Zählers 402 beispielsweise dadurch geschehen, daß der Zähler beim Erkennen eines Gegenlenkens schneller als sonst (in größeren Schritten) oder augenblicklich auf den Ruhezählerstand zurückgesetzt wird. Von hier aus schließt sich das gleiche Verfahren an wie vor (Hochzählen des Zählers in die andere Richtung, bis der jeweils andere Vergleicher 406, 407 anspricht. Vor Ansprechen eines der Vergleicher kann der Umschalter zum Auswählen der lenkoptimierenden Bremsdruckveränderung geschaltet sein. Nach Überschreiten des anderen Schwellenwerts wird abermals die stabilitätsorientierte Bremsdruckmodifizierung angewählt. Somit setzt sich ein Spurwechsel wie in Figur 2 gezeigt aus zumindest vier Phasen zusammen, nämlich Lenkoptimierung links, Stabilitätsoptimierung links, Lenkoptimierung rechts, Stabilitätsoptimierung rechts. Diese vier Phasen werden im Zusammenwirken von Zähler 401 und Vergleichen 406, 407 unterschieden. Die erste entspricht dem Hochzählen bis zum einen Schwellenwert, die zweite dem Verbleib des Zählerstands jenseits dieses Schwellenwerts, die dritte einem Zeitraum bevor der Zählerstand den zweiten Schwellenwert überschreitet und die vierte der Zeitdauer des Zählstands jenseits des anderen Schwellenwerts.

Nachfolgend wird beschrieben, wie Instabilitäten erkannt werden können.

Eine Möglichkeit ist es, die Instabilität bezugnehmend auf das Laufverhalten mehrerer Räder des Fahrzeugs zu ermitteln. Beispielsweise können die Laufverhalten der Räder einer Achse miteinander verglichen werden. Insbesondere können Schlupfwerte dieser Räder oder daraus abgeleitete Werte miteinander verglichen werden. Es können die Werte der Räder einer Achse oder aller Achsen miteinander verglichen werden. Es können die Räder der angetriebenen oder der nicht angetriebenen Achse gewählt werden.

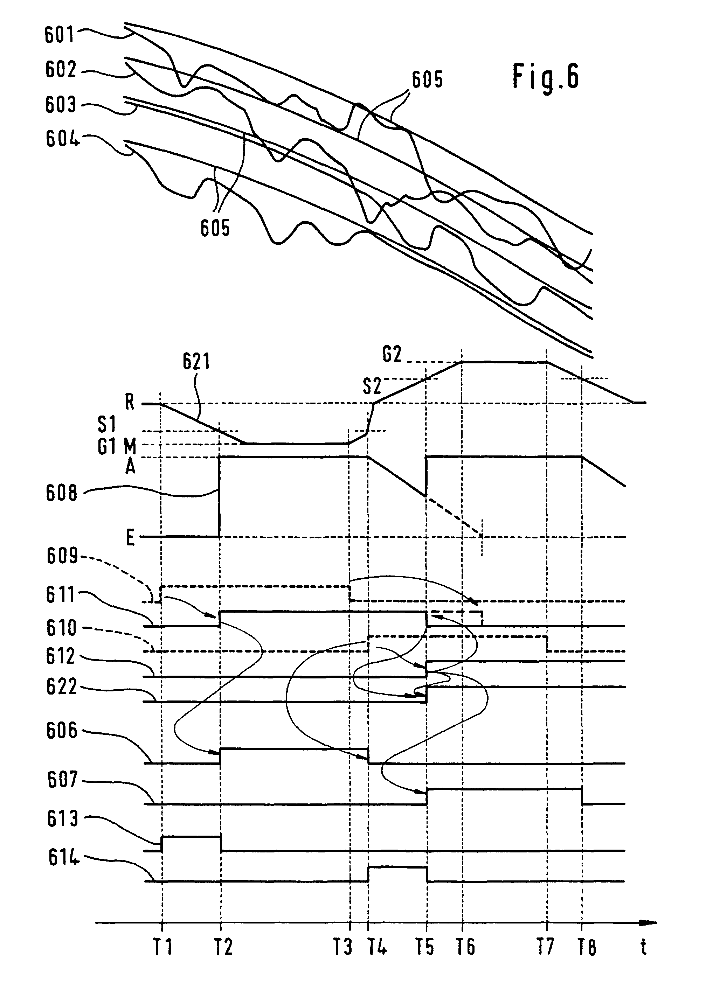

In Figur 6 sind oben die Radgeschwindigkeitsmuster der vier Räder eines Fahrzeugs bei einem Spurwechsel gemäß Figur 2 im Vergleich zur Referenzgeschwindigkeit dargestellt. Kurve 605 ist jeweils die (wegen der Bremsung fallende) Referenzgeschwindigkeit. Die Kurven 601 bis 604 entsprechenden den Radgeschwindigkeiten vorne links, vorne rechts, hinten rechts und hinten links. Der dargestellte Zeitraum entspricht dem Zeitraum des Spurwechsels in Figur 4. Bei Anwendung der obigen Steuerung wären demnach die bereits beschriebenen vier Phasen (Lenkbegünstigung links, Stabilitätsbegünstigung links, Lenkbegünstigung rechts, Stabilitätsbegünstigung rechts) in diesem Zeitraum zu unterscheiden. Etwa die linke Hälfte des Diagramms entspricht der Linkskurve, die rechte Hälfte der Rechtskurve. Vergleicht man beispielsweise die Schlupfwerte der Räder an der Hinterachse (603 hinten rechts, 604 hinten links), stellt man fest, daß jeweils das Außenrad aufgrund der vergleichsweise hohen Belastung wegen des Rollmoments vergleichsweise glatt läuft, während das Innenrad deutliche Schlupfeinläufe zeigt, die gegebenenfalls schon von ABS alleine ausgeregelt werden. Indem nun beispielsweise die Schlupfwerte (Schlupf = Unterschiede zwischen Referenzgeschwindigkeit und Radgeschwindigkeit) miteinander verglichen werden, kann auf Instabilitäten geschlossen werden. Vorzugsweise werden dabei nicht (nur) punktuelle Werte miteinander verglichen, sondern gemittelte Werte oder Werte, die aus einer Weiterverarbeitung der Schlupfwerte der einzelnen Räder beruhen, um Fehlerkennungen ausschließen zu können. Somit können unter Anwendung verschiedener Kriterien instabile Kurvenfahrten bezugnehmend auf das Laufverhalten der Räder (insbesondere bezugnehmend auf deren Schlupfverhalten) ermittelt werden. Die eben beschriebenen Vorgänge können in der Überprüfungseinrichtung 321 vorgenommen werden.

Die Erkennung einer Kurvenfahrt kann ähnlich wie soeben beschrieben erfolgen. Auch die Kurvenfahrt läßt sich an den Radgeschwindigkeitsmuster ablesen. Somit kann beispielsweise prinzipiell auf Kurvenfahrt erkannt werden, wenn die Geschwindigkeitsmuster der Räder einer Achse um einen bestimmten Betrag voneinander abweichen. Die Richtung der Kurve kann anhand des Vorzeichens der Abweichung entschieden werden. Zusätzlich oder statt dessen kann aber auch ein Sensor, beispielsweise ein Lenkwinkelsensor verwendet werden. Die eben beschriebenen Komponenten können die Erkennungseinrichtung 320 sein.

Weitere geeignete Bremsunterstützungsstrategien können abgerufen werden, wenn nicht nur eine gebremste instabile Kurvenfahrt erkannt wird, sondern auch gegebenenfalls ein gebremster instabiler Spurwechsel (also zwei in kurzer Zeit aufeinanderfolgende gebremste instabile Kurvenfahrten in unterschiedlichen Richtungen. Um dies zu erkennen, kann nach Beendigung einer ersten instabilen gebremsten Kurvenfahrt (beispielsweise unterschreitet Zählerstand den betreffenden Schwellenwert im zugehörigen Vergleicher) eine Torzeit definiert werden, wenn innerhalb dieser Torzeit eine gebremste instabile Kurvenfahrt in die andere Richtung erkannt wird (Zählerstand des Zählers 401 überschreitet den anderen Schwellenwert des anderen Vergleichers), kann auf einen gebremsten instabilen Spurwechsel erkannt werden. Dadurch können weitere geeignete Abwandlungen der einzustellenden Bremsdrücke (beispielsweise durch Verändern der Schwellenwerte für ABS) vorgenommen werden. In Figur 3 unten würde dann der Umschalter 327 die Abwandlungseinrichtung 324 anwählen, die geeignete Veranlassungen trifft.

Figur 4 zeigt, wie die oben beschriebene Torzeit implementiert werden kann. Es ist eine Erfassungsrichtung 409 vorgesehen, die eine als Zähler ausgebildete Torzeiteinrichtung 408 aufweist. Der Zähler kann von einem Startwert auf einen Endwert gezählt werden. Der Startwert liegt vor, wenn die erste instabile, gebremste Kurve beendet ist, von da an wird der Zähler in Richtung auf den Endwert gezählt. Wenn vor Erreichen des Endwerts (beispielsweise Null) eine gebremste instabile Kurvenfahrt in die andere Richtung erkannt wurde, kann ein Signal 422 ausgegeben werden, das wie weiter oben beschrieben verwendet werden kann, um eine geeignete Abwandlung der Bremsdrücke zu veranlassen (beispielsweise über Koordinierungseinrichtung 410 und Signal 311 auf den Umschalter 327 in Figur 3).

Der Startwert des Zählers der Torzeiteinrichtung 408 kann nach Maßgabe externer Bedingungen gesetzt werden. Beispielsweise kann er weiter vom Endwert entfernt sein, wenn ein niedrigerer Reibwert vorliegt (beispielsweise nasse Fahrbahn oder Glatteis). Damit wird der Erfahrung Rechnung getragen, daß bei glatten Fahrbahnen die dynamischen Nachwirkungen einzelner Fahrmanöver länger zur berücksichtigen sind. Wenn beispielsweise der Endwert Null ist, kann bei trockener Fahrbahn ein erster Startwert und bei nasser/glatter Fahrbahn ein höherer zweiter Startwert gewählt werden. Das Ende der Torzeit wird durch Erreichen des Endwerts definiert. Um die reibwertabhängige Setzung des Startwerts zu ermöglichen, empfängt die Erfassungseinrichtung 409 über Leitung 412 geeignete Signale, beispielsweise aus dem Signalstrang 312 in Figur 3.

Nochmals bezugnehmend auf Figur 6 werden einzelne Signale erläutert, wie sie erfindungsgemäß erzeugt und weiter verwertet werden können. 621 repräsentiert einen Zählerstand, wie er sich auf Signalleitung 421 als Ausgang des Zählers 401 der Bestimmungseinrichtung 325 ergibt. S1 repräsentiert den einen Schwellenwert zur Definierung der Schwellenzeitspanne in die eine Richtung, S2 den Schwellenwert zur Definierung der Schwellenzeitspanne in die andere Richtung. Die Schwellenwerte S1, S2 können, müssen aber nicht gleich zueinander sein. G1 und G2 sind die jeweiligen Grenzwerte, über die hinaus ein Zähler nicht gezählt wird, selbst wenn die instabile Kurvenfahrt weiter vorliegt. R ist der Ruhezählerstand, beispielsweise Null.

Im Zeitpunkt T1 wird erstmals eine instabile, gebremste Kurvenfahrt erkannt. Bis zum Zeitpunkt T2 wird der Zähler 401 hochgezählt (dem Betrag nach). Zum Zeitpunkt T2 überschreitet der Zählerstand den Schwellenwert S1. Damit ist die Schwellenzeitspanne erreicht, und danach wird der Bremsdruck stabilitätsbegünstigend modifiziert. Zum Zeitpunkt T4 wird der Schwellenwert S1 wieder unterschritten, so daß dann die stabilitätsbegünstigende Bremsdruckmodifizierung beendet ist. Schon vorher, ab dem Zeitpunkt T3 wird der Zählerstand auf den Ruhezählerstand zurückgeführt. Hierbei wird angenommen, daß ab dem Zeitpunkt T3 kein instabiler Zustand mehr erfaßt wird. Würde sich daran nichts ändern, würde der Zählerstand mit gleicher Neigung wie zwischen T3 und T4 auf Null zurückgezählt werden. Im Beispiel wird aber angenommen, daß ab dem Zeitpunkt T4 eine Kurve in die andere Richtung erfaßt wird. Deshalb wird der Zählerstand schnell auf den Ruhezählerstand zurückgeführt und von da aus in die andere Richtung hochgezählt. Zum Zeitpunkt T5 ist der Schwellenwert S2 erreicht. Hier spricht der andere Vergleicher an. Danach wird der Zähler noch weiter bis zum Grenzwert G2 hochgezählt. Zum Zeitpunkt T7 wird eine Beendigung der instabilen Kurvenfahrt angenommen, so daß ab diesem Zeitpunkt der Zähler wieder auf den Ruhezählerstand zurückgeführt wird. Zum Zeitpunkt T8 ist der Schwellenwert S2 unterschritten, so daß die stabilitätsoptimierende Bremsunterstützung beendet wird. Etwas später hat der Zähler wieder den Ruhezählerstand eingenommen.

Die Signale 606 und 607 können die Ausgangssignale der Vergleiche 406 und 407 sein. 608 ist ein Beispiel für die Implementierung der Torzeiteinrichtung 408. 608 zeigt den Zählerstand des Zählers 408 an. Er kann beispielsweise beim Überschreiten des jeweiligen Schwellenwerts (S1 oder S2) auf den Anfangszählerstand gesetzt werden. Beim Unterschreiten der jeweiligen Schwellenwerte (in Richtung auf den Ruhezählerstand zu) wird begonnen, diesen Anfangszählerstand auf den Endzählerstand hin zu zählen (beispielsweise auf Null herunterzuzählen). Die Torzeit ist dann definiert zwischen dem Beginn und der Beendigung des Herunterzählens, in Figur 6 also zwischen Zeitpunkt T4 und einem Zeitpunkt hinter T6. Wenn innerhalb dieser Torzeit eine weitere instabile Bremsung erkannt wird, kann auf einen Spurwechsel geschlossen werden. Er kann durch ein Signal 622 angezeigt werden, das beispielsweise auf der Leitung 422 in Figur 4 vorliegen kann. Dadurch können geeignete Bremsdruckabwandlungen veranlaßt werden. Beispielsweise kann der Bremsdruck durch sehr steilen Druckaufbau am äußeren Vorderrad abgewandelt werden.

A bezeichnet den Anfangszählerstand des Zählers 408 und ist demnach ein Maß für die Länge der Torzeit. Er kann entsprechend äußeren Bedingungen, beispielsweise Reibwerten, variabel sein. Bei gleicher Zählrate ändert sich dadurch die Länge der Torzeit. Die Kurven 609 bis 613 zeigen verschiedene andere Signale, die ebenfalls erzeugt werden können. 609 ist ein Signal, dessen Vorliegen grundsätzlich eine instabile Kurvenfahrt in die eine Richtung anzeigt, sinngemäß das gleiche gilt für Signal 610 für eine Kurve in die andere Richtung. Signale 611 und 612 bezeichnen Zeiträume, innerhalb derer die Stabilität des Fahrzeugs kritisch ist und auch nach Abklingen des ursprünglich kritischen Zustands zumindest noch durch eben diesen Zustand beeinflußt ist. Die Zeitverläufe 613 und 614 bezeichnen Signale, die jeweils den Zeitraum vor Erreichen der Schwellenzeitspanne bei Kurvenfahrt in der einen Richtung bzw. in der anderen Richtung markieren. Somit können die Zeiträume T1 bis T2 und T4 bis T5 als jeweils lenkoptimierte Zeiten und die Zeiten T2 bis T3 und T5 bis T8 als jeweils stabilitätsoptimierte Zeiten angesehen werden.

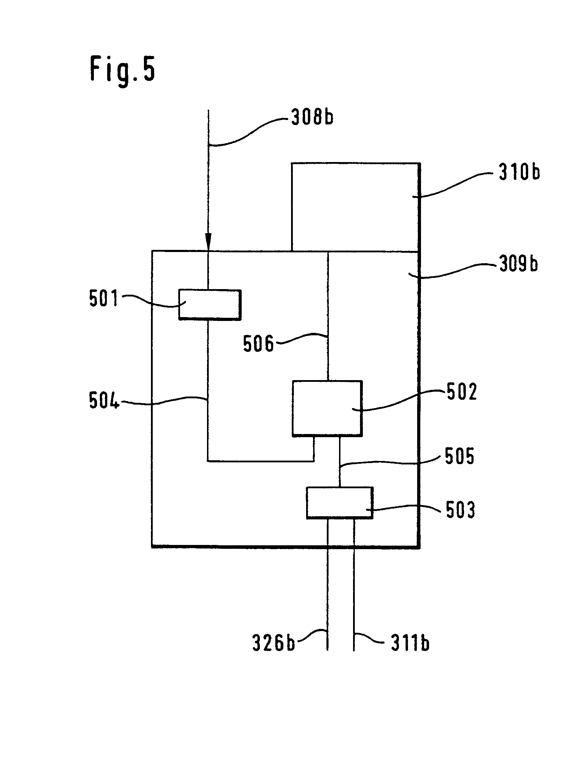

Figur 5 zeigt eine Ausführungsform, mittels derer die verzögerungsoptimierte Bremsdruckbeeinflussung beispielsweise entsprechend ABS mit den ansonsten genannten Bremsstrategien (lenkoptimierende Veränderung, stabilitätsoptimierende Modifizierung und Abwandlung zur Optimierung eines Spurwechsels) vereint werden können. Gezeigt ist beispielhaft die Komponente 309b in Figur 3 oben. Sie empfängt das Radsignal 308b, das in einer Verarbeitungseinrichtung 501 ausgewertet werden kann, wobei diese Einrichtung weitere (nicht gezeigte) Signale empfangen kann. Das Signal 504 kann beispielsweise ein den Radschlupf anzeigendes Signal oder die Radgeschwindigkeit anzeigendes Signal sein. 503 ist eine Einrichtung, die einen Vorgabewert bzw. Sollwert erzeugt. Sie empfängt einerseits Signale 311b (aus dem Signalstrang 311 in Figur 3 oben), andererseits ein Signal 326b, das aus dem Signal 326 in Figur 3 unten hergeleitet sein kann. 311b symbolisiert dabei einen Schwellenwert, wie er durch ABS alleine vorgegeben werden würde, während 326b einen nach Maßgabe der übrigen, oben beschriebenen Bremsstrategien bestimmten Schwellenwert zur Bremsdruckeinstellung bezeichnet. Die Einrichtung 503 kann dabei durch Prioritätsbildung beispielsweise das Signal 326b bevorzugen, wenn dort ein Signal vorliegt, und ansonsten das Signal 311b wählen.

Die erfindungsgemäßen, zeitgesteuerten Strategien zur Bremsdruckmodifizierung, Beeinflussung und Abwandlung sprechen damit die ABS-Schwellenwerte an. Eine andere Strategie wäre es, ABS neben die genannten Bremsstrategien zu stellen und durch eine geeignete Prioritätsbildung den Bremsdruck einzustellen.

Die Einrichtung 502 vergleicht den Sollwert auf Leitung 505 mit dem Istwert auf Leitung 504 und erzeugt ein oder mehrere Ausgangssignale 506, die zur Ansteuerung der Zulauf- bzw. Ablaufventile im Ventilblock 310b verwendet werden können.

## Patentansprüche

1. Verfahren zur Verbesserung der Fahreigenschaft eines Fahrzeugs bei gebremster Kurvenfahrt, mit den Schritten
Erkennen einer Kurvenfahrt und der Kurvenrichtung,
Ermitteln des Laufverhaltens einzelner Räder (303a-d), und
Beibehalten der gebremsten Kurvenfahrt oder Beeinflussung des Bremsdrucks der Bremse (301a-d, 306a-d) an einem Rad nach Maßgabe des Laufverhalten dieses Rades(303a-d),
Überprüfen des Fahrzustandes des Fahrzeugs daraufhin, ob eine Instabilität vorliegt,
**gekennzeichnet durch** den weiteren Schritt
Modifizieren des Bremsdrucks zumindest einer Bremse (301a-d, 306a-d) eines Rades(303a-d), wenn während der Kurvenfahrt eine Instabilität über eine Zeitspanne hinweg, die eine Schwellenzeitspanne erreicht, erkannt wird.

2. Verfahren nach Anspruch 1, **dadurch gekennzeichnet, daß** die Modifizierung so erfolgt, daß der Bremsdruck an zumindest einem kurveninnenseitigen Rad abgesenkt und/oder an zumindest einem kurvenaußenseitigen Rad angehoben wird.

3. Verfahren nach Anspruch 1 oder 2, **dadurch gekennzeichnet, daß** die Modifizierung so erfolgt, daß die Bremsdrücke an den Rädern der Hinterachse abgesenkt werden.

4. Verfahren nach einem der vorherigen Ansprüche, **dadurch gekennzeichnet, daß** während der Kurvenfahrt in der Zeitspanne vor Erreichen der Schwellenzeitspanne der Bremsdruck zumindest einer Bremse verändert wird.

5. Verfahren nach Anspruch 4, **dadurch gekennzeichnet, daß** die Veränderung so erfolgt, daß der Bremsdruck an zumindest einem kurveninnenseitigen Rad angehoben und/oder an zumindest einem kurvenaußenseitigen Rad abgesenkt wird.

6. Verfahren nach einem der vorherigen Ansprüche, **dadurch gekennzeichnet, daß** die Modifizierung unterbleibt bzw. abgebrochen wird, wenn ein Gegenlenkvorgang bzw. eine Kurvenfahrt in die andere Richtung erkannt wird oder nachdem die instabile Kurvenfahrt beendet ist.

7. Verfahren nach einem der vorherigen Ansprüche, **dadurch gekennzeichnet, daß** die Zeitspanne der Instabilität während der Kurvenfahrt anhand der Regelzyklen eines ABS-Systems bestimmt wird.

8. Verfahren nach einem der vorherigen Ansprüche, **dadurch gekennzeichnet, daß** bei der Überprüfung des Fahrzustandes Daten oder Werte der Räder einer Achse miteinander verglichen werden.

9. Verfahren nach Anspruch 8, **dadurch gekennzeichnet, daß** auf eine Instabilität geschlossen wird, wenn ein Rad der Achse deutliche Schlupfeinläufe zeigt, das andere dagegen nicht, oder wenn am einen Rad der Achse der Bremsdruck beeinflußt wird, aber am anderen schwächer oder nicht.

10. Verfahren nach einem der vorherigen Ansprüche, **dadurch gekennzeichnet, daß** die Kurvenfahrt bezugnehmend auf das Laufverhalten von Rädern einer Achse erkannt wird.

11. Verfahren nach einem der vorherigen Ansprüche, **dadurch gekennzeichnet, daß** die Kurvenfahrt bezugnehmend auf einen Lenkwinkelsensor erkannt wird.

12. Verfahren nach einem der vorherigen Ansprüche, **dadurch gekennzeichnet, daß** auf einen kritischen Spurwechsel erkannt wird, wenn innerhalb einer bestimmten oder bestimmbaren Zeitdauer nach einer Kurvenfahrt im instabilen Zustand in die eine Richtung eine Kurvenfahrt im instabilen Zustand in die andere Richtung erkannt wird, wobei auf die Erkennung hin weitere Maßnahmen, insbesondere eine Bremsdruckabwandlung, veranlaßt werden.

13. Verfahren nach Anspruch 12, **dadurch gekennzeichnet, daß** die Zeitdauer nach Maßgabe des Reibwerts zwischen Rad und Fahrbahn bestimt wird, wobei die Zeitdauer mit sinkendem Reibwert steigt.

14. Verfahren nach einem der vorherigen Ansprüche, **dadurch gekennzeichnet, daß** die Modifizierung und/oder Veränderung und/oder Abwandlung des Bremsdruckes durch Verändern der für die Vornahme der Bremsdruckbeeinflussung herangezogenen Schwellenwerte erfolgt.

15. Vorrichtung zur Verbesserung der Fahreigenschaft eines Fahrzeugs bei gebremster Kurvenfahrt, mit
einer Erkennungseinrichtung (320) zum Erkennen einer Kurvenfahrt sowie der Kurvenrichtung,
einer Ermittlungseinrichtung (302a-d) zum Ermitteln des Laufverhaltens einzelner Räder (303a-d),
einer Beeinflussungseinrichtung (309, 310), die die gebremste Kurvenfahrt beibehält oder den Bremsdruck der Bremse (301a-d, 306a-d) an einem Rad (303a-d) nach Maßgabe des Laufverhalten dieses Rades (303a-d) beeinflußt,
einer Überprüfungseinrichtung (321) zum Überprüfen des Fahrzustandes des Fahrzeugs daraufhin, ob eine Instabilität vorliegt, **gekennzeichnet durch**
eine Modifizierungseinrichtung (322) zum Modifizieren des Bremsdrucks zumindest einer Bremse (301a-d, 306a-d) eines Rades (303a-d), wenn während der Kurvenfahrt eine Instabilität über eine Zeitspanne hinweg, die eine Schwellenzeitspanne erreicht, erkannt wird.

16. Vorrichtung nach Anspruch 15, **dadurch gekennzeichnet, daß** die Modifizierungseinrichtung (322) den Bremsdruck an zumindest einem kurveninnenseitigen Rad (303a-d) absenkt und/oder an zumindest einem kurvenaußenseitigen Rad (303a-d) anhebt.

17. Vorrichtung nach Anspruch 15 oder 16, **dadurch gekennzeichnet, daß** die Modifizierungseinrichtung (322) die Bremsdrücke an den Rädern der Hinterachse (305) absenkt.

18. Vorrichtung nach einem der vorherigen Ansprüche, **gekennzeichnet durch** eine Veränderungseinrichtung (323), die während der Kurvenfahrt in der Zeitspanne vor Erreichen der Schwellenzeitspanne den Bremsdruck zumindest einer Bremse (301a-d, 306a-d) verändert.

19. Vorrichtung nach Anspruch 18, **dadurch gekennzeichnet, daß** die Veränderungseinrichtung (323) den Bremsdruck an zumindest einem kurveninnenseitigen Rad (303a-d) anhebt und/oder an zumindest einem kurvenaußenseitigen Rad (303a-d) absenkt.

20. Vorrichtung nach einem der vorherigen Ansprüche, **dadurch gekennzeichnet, daß** die Modifizierungseinrichtung (322) die Modifizierung unterläßt bzw. abbricht, wenn ein Gegenlenkvorgang bzw. eine Kurvenfahrt in die andere Richtung erkannt wird.

21. Vorrichtung nach einem der vorherigen Ansprüche, **dadurch gekennzeichnet, daß** die Beeinflussungseinrichtung (309, 310) ein ABS-System ist, wobei eine Bestimmungseinrichtung (325) vorgesehen ist, die die Zeitspanne der Instabilität während der Kurvenfahrt anhand der Regelzyklen des ABS-Systems bestimmt.

22. Vorrichtung nach Anspruch 21, **dadurch gekennzeichnet, daß** die Bestimmungseinrichtung (325) einen Zähler mit einem Ruhezählerstand aufweist, der dann, wenn eine instabile Kurvenfahrt erkannt wird, nach Maßgabe der Kurvenrichtung inkrementiert bzw. dekrementiert wird, wobei ein oberer und ein unterer Schwellenwert vorgesehen sind, die die Schwellenzeitspanne bilden.

23. Vorrichtung nach Anspruch 22, **dadurch gekennzeichnet, daß** der Ruhezählerstand 0, der eine Schwellenwert kleiner als 0 und der andere Schwellenwert größer als 0 ist.

24. Vorrichtung nach Anspruch 22 oder 23, **dadurch gekennzeichnet, daß** der Zähler bis zu einem oberen bzw. unteren Grenzwert herauf- bzw. heruntergezählt wird, wobei der obere Grenzwert über dem oberen Schwellenwert und der untere Grenzwert unter dem unteren Schwellenwert liegen.

25. Vorrichtung nach einem der Ansprüche 22 bis 24, **dadurch gekennzeichnet, daß** dann, wenn keine Kurvenfahrt erkannt wird, der Zähler schrittweise auf den Ruhezählerstand zurückgeführt wird.

26. Vorrichtung nach einem der Ansprüche 22 bis 25, **dadurch gekennzeichnet, daß** dann, wenn eine Kurvenfahrt in eine Richtung erkannt wird, die entgegengesetzt zu der ist, die dem Zählerstand entspricht, der Zähler schnell auf den Ruhezählerstand zurückgeführt wird.

27. Vorrichtung nach einem der Ansprüche 22 bis 26, **gekennzeichnet durch**
eine Torzeiteinrichtung (408), die nach dem Ende einer kritischen Kurvenfahrt eine Torzeit definiert,
eine Erfassungseinrichtung (409), die auf einen kritischen Spurwechsel schließt, wenn innerhalb der Torzeit
eine kritische Kurvenfahrt in die andere Richtung erkannt wird, und
eine Abwandlungseinrichtung (324), die den Bremsdruck an einem oder mehreren Rädern abwandelt, wenn ein kritischer Spurwechsel erkant wird.

28. Vorrichtung nach Anspruch 27, **dadurch gekennzeichnet, daß** die Torzeiteinrichtung (408) einen Zähler aufweist, der von einem Anfangszählerstand herabgezählt wird, wobei der Anfangszählerstand nach Maßgabe des Reibwerts zwischen Rad (303a-d) und Fahrbahn gesetzt wird.

29. Vorrichtung nach einem der vorherigen Ansprüche, **dadurch gekennzeichnet, daß** die Überprüfungseinrichtung (321) eine Vergleichseinrichtung aufweist, die Daten oder Werte der Räder (303a-d) einer Achse miteinander vergleicht.

30. Vorrichtung nach einem der vorherigen Ansprüche, **dadurch gekennzeichnet, daß** die Erkennungseinrichtung (320) eine Vergleichseinrichtung aufweist, die Daten oder Werte der Räder (303a-d) einer Achse miteinander vergleicht.

31. Vorrichtung nach einem der vorherigen Ansprüche, **dadurch gekennzeichnet, daß** die Modifizierungseinrichtung (322) und/oder die Veränderungseinrichtung (323) und/oder die Abwandlungseinrichtung (324) eine Einrichtung zur Veränderung der für die Vornahme der Bremsdruckbeeinflussung herangezogenen Schwellenwerte aufweist.

## Claims

1. Method of improving the driving performance of a vehicle during a braked cornering maneuver, comprising the following steps:
detecting a cornering maneuver and the direction of cornering,
determining the rolling characteristics of individual wheels (303a-d), and
maintaining the braked cornering maneuver or influencing the braking pressure of the brake (301a-d, 305a-d) on a wheel according to the rolling characteristics of this wheel (303a-d),
checking the driving condition of the vehicle with respect to whether instability prevails,
**characterized by** the further step of
modifying the braking pressure of at least one brake (301a-d, 306a-d) of a wheel (303a-d) when an instability is detected during cornering which lasts over a period that reaches a threshold period.

2. Method as claimed in claim 1,
**characterized in that** the modification is effected in such a manner that the braking pressure is decreased on at least one inside wheel in a turn and/or is increased on at least one outside wheel in a turn.

3. Method as claimed in claim 1 or 2,
**characterized in that** the modification is effected in such a manner that the braking pressures on the wheels of the rear axle are decreased.

4. Method as claimed in any one of the preceding claims,
**characterized in that** the braking pressure of at least one brake is changed during cornering in the period before the threshold period is reached.

5. Method as claimed in claim 4,
**characterized in that** the change is effected in such a manner that the braking pressure is increased on at least one inside wheel in a turn and/or decreased on at least one outside wheel in a turn.

6. Method as claimed in any one of the preceding claims,
**characterized in that** the modification is omitted or discontinued when a countersteering maneuver or cornering in the other direction is detected or after unstable cornering is terminated.

7. Method as claimed in any one of the preceding claims,
**characterized in that** the period of instability during cornering is determined by way of the control cycles of an ABS system.

8. Method as claimed in any one of the preceding claims,
**characterized in that** data or values of the wheels of one axle are compared when checking the driving condition.

9. Method as claimed in claim 8,
**characterized in that** instability is inferred from the fact that one wheel of the axle, contrary to the other one, exhibits a considerable amount of slip, or when the braking pressure is influenced on one wheel of the axle, to a weaker extent on the other one, or is not influenced at all.

10. Method as claimed in any one of the preceding claims,
**characterized in that** cornering is detected by making reference to the rolling characteristics of wheels of one axle.

11. Method as claimed in any one of the preceding claims,
**characterized in that** cornering is detected by making reference to a steering angle sensor.

12. Method as claimed in any one of the preceding claims,
**characterized in that** a critical lane change is identified if, within a defined or definable duration after cornering in the unstable condition in one direction, there is detected cornering in the unstable condition to the other direction, and further measures, especially braking pressure alteration are initiated upon the detection.

13. Method as claimed in claim 12,
**characterized in that** the duration is determined according to the coefficient of friction between the wheel and the road surface, with the duration rising as the coefficient of friction decreases.

14. Method as claimed in any one of the preceding claims,
**characterized in that** the modification and/or change and/or alteration of the braking pressure is effected by changing the threshold values which are taken into account for influencing the braking pressure.

15. Device for improving the driving performance of a vehicle during a braked cornering maneuver, including
a detection device (320) for detecting a cornering maneuver and the direction of cornering,
a determining device (302a-d) for determining the rolling characteristics of individual wheels (303a-d),
an influencing device (309, 310) which maintains the braked cornering maneuver or influences the braking pressure of the brake (301a-d, 306a-d) on a wheel (303a-d) according to the rolling characteristics of this wheel (303a-d),
a checking device (321) for checking the driving condition of the vehicle as to whether instability prevails,
**characterized by**
a modifying device (322) for modifying the braking pressure of at least one brake (301a-d, 306a-d) of a wheel (303a-d) when an instability is detected during cornering over a period that reaches a threshold period.

16. Device as claimed in claim 15,
**characterized in that** the modifying device (322) decreases the braking pressure on at least one inside wheel (303a-d) in a turn and/or increases it on at least one outside wheel (303a-d) in a turn.

17. Device as claimed in claim 15 or 16,
**characterized in that** the modifying device (322) decreases the braking pressures on the wheels of the rear axle (305).

18. Device as claimed in any one of the preceding claims,
**characterized by** a changing device (323) which changes the braking pressure of at least one brake (301a-d, 306a-d) during cornering in the period before the threshold period is reached.

19. Device as claimed in claim 18,
**characterized in that** the changing device (323) increases the braking pressure on at least one inside wheel (303a-d) in a turn and/or decreases it on at least one outside wheel (303a-d) in a turn.

20. Device as claimed in any one of the preceding claims,
**characterized in that** the modifying device (322) omits or discontinues the modification when a countersteering maneuver or cornering in the other direction is detected.

21. Device as claimed in any one of the preceding claims,
**characterized in that** the influencing device (309, 310) is an ABS system, and there is provision of a determining device (325) which determines the period of the instability during cornering by way of the control cycles of the ABS system.

22. Device as claimed in claim 21,
**characterized in that** the determining device (325) includes a counter with a fixed counter reading which is incremented or decremented, respectively, according to the direction of the bend when unstable cornering is detected, there being provision of a top and a bottom threshold value producing the threshold period.

23. Device as claimed in claim 22,
**characterized in that** the fixed counter reading is zero, one threshold value is lower than zero, and the other threshold value exceeds zero.

24. Device as claimed in claim 22 or 23,
**characterized in that** the counter is counted upwards or downwards until a top or a bottom limit value, respectively, the top limit value being above the top threshold value and the bottom limit value below the bottom threshold value.

25. Device as claimed in any one of claims 22 to 24,
**characterized in that** the counter is restored stepwise to the fixed counter reading when no cornering maneuver is detected.

26. Device as claimed in any one of claims 22 to 25,
**characterized in that** when a cornering maneuver in one direction is detected which is opposite to the direction that corresponds to the counter reading, the counter is quickly restored to the fixed counter reading.

27. Device as claimed in any one of claims 22 to 26,
**characterized by**
a gate time device (408) which defines a gate time after the end of a critical cornering maneuver,
a gathering device (409) which concludes a critical lane change when a critical cornering maneuver in the other direction is detected during the gate time, and
an alteration device (324) which alters the braking pressure on one or more of the wheels when a critical lane change is detected.

28. Device as claimed in claim 27,
**characterized in that** the gate time device (408) includes a counter which is counted downwards from an initial counter reading, and the initial counter reading is set according to the coefficient of friction between the wheel (303a-d) and the road surface.

29. Device as claimed in any one of the preceding claims,
**characterized in that** the checking device (321) includes a comparison device which compares data or values of the wheels (303a-d) of an axle.

30. Device as claimed in any one of the preceding claims,
**characterized in that** the detection device (320) includes a comparison device which compares data or values of the wheels (303a-d) of an axle.

31. Device as claimed in any one of the preceding claims,
**characterized in that** the modifying device (322) and/or the changing device (323) and/or the alteration device (324) includes a device for changing the threshold values which are taken into account for influencing the braking pressure.

## Revendications

1. Procédé pour améliorer la tenue de route d'un véhicule en cas de conduite en courbe avec freinage, comportant les étapes suivantes :
reconnaissance d'une conduite en courbe et de la direction de la courbe,
détermination du comportement en roulement des différentes roues (303a-d), et
maintien de la conduite en courbe avec freinage ou action sur la pression de freinage du frein (301a-d, 306a-d) sur une roue en fonction du comportement en roulement de cette roue (303a-d),
vérification de l'état de conduite du véhicule pour savoir s'il existe une instabilité
**caractérisé par** l'étape complémentaire suivante :
modification de la pression de freinage d'au moins un frein (301a-d, 306a-d) d'une roue (303a-d), si pendant la conduite en courbe une instabilité est reconnue pendant un intervalle de temps qui atteint un intervalle de temps de seuil.

2. Procédé selon la revendication 1, **caractérisé en ce que** la modification s'effectue **en ce que** la pression de freinage est abaissée sur au moins une roue côté intérieur de la courbe et/ou est relevée sur au moins une roue côté extérieur de la courbe.

3. Procédé selon la revendication 1 ou 2, **caractérisé en ce que** la modification s'effectue **en ce que** les pressions de freinage sur les roues de l'essieu arrière sont abaissées.

4. Procédé selon l'une des revendications précédentes, **caractérisé en ce que** pendant la conduite en courbe, on fait varier la pression de freinage d'au moins un frein pendant l'intervalle de temps qui s'écoule avant que ne soit atteint l'intervalle de temps de seuil.

5. Procédé selon la revendication 4, **caractérisé en ce que** la variation s'effectue **en ce que** la pression de freinage est relevée sur au moins une roue côté intérieur de la courbe et/ou abaissée sur au moins une roue côté extérieur de la courbe.

6. Procédé selon l'une des revendications précédentes, **caractérisé en ce que** la modification ne se fait pas ou est interrompue lorsqu'est reconnu un contre-braquage ou une conduite en courbe dans l'autre direction, ou après que la conduite en courbe instable est terminée.

7. Procédé selon l'une des revendications précédentes, **caractérisé en ce que** l'intervalle de temps de l'instabilité pendant la conduite en courbe est déterminé à l'aide des cycles de régulation d'un système ABS.

8. Procédé selon l'une des revendications précédentes, **caractérisé en ce que** lors de la vérification de l'état de conduite, des données ou valeurs des roues d'un essieu sont comparées les unes aux autres.

9. Procédé selon la revendication 8, **caractérisé en ce que** l'on conclut à une instabilité lorsqu'une roue de l'essieu indique nettement un début de glissement et l'autre non, ou si sur une roue de l'essieu la pression de freinage est influencée, mais sur l'autre roue elle l'est moins ou pas du tout.

10. Procédé selon l'une des revendications précédentes, **caractérisé en ce que** la conduite en courbe est reconnue par référence au comportement en roulement des roues d'un essieu.

11. Procédé selon l'une des revendications précédentes, **caractérisé en ce que** la conduite en courbe est reconnue par référence à un capteur d'angle de braquage.

12. Procédé selon l'une des revendications précédentes, **caractérisé en ce qu'**un changement de direction critique est reconnu si pendant une durée déterminée ou qui peut être déterminée, après une conduite en courbe à l'état instable dans une direction, une conduite en courbe à l'état instable dans l'autre direction est reconnue, à la suite de cette reconnaissance des mesures complémentaires, en particulier un changement de la pression de freinage, étant provoqué.

13. Procédé selon la revendication 12, **caractérisé en ce que** la durée est déterminée en fonction du coefficient de friction entre la roue et la chaussée, la durée augmentant lorsque le coefficient de friction diminue.

14. Procédé selon l'une des revendications précédentes, **caractérisé en ce que** la modification et/ou la variation et/ou le changement de la pression de freinage s'effectuent par variation des valeurs de seuil utilisées pour procéder à l'intervention sur la pression de freinage.

15. Dispositif pour améliorer la tenue de route d'un véhicule en cas de conduite en courbe avec freinage, comportant
un dispositif de reconnaissance (320) pour reconnaître une conduite en courbe ainsi que la direction de la courbe,
un dispositif de détermination (302a-d) pour déterminer le comportement en roulement des différentes roues (303a-d),
un dispositif d'intervention (309, 310) qui maintient la conduite en courbe avec freinage ou agit sur la pression de freinage du frein (301a-d, 306a-d) sur une roue (303a-d) en fonction du comportement en roulement de cette roue (303ad),
un dispositif de vérification (321) pour vérifier si l'état de conduite du véhicule présente une instabilité, **caractérisé par**
un dispositif de modification (322) pour modifier la pression de freinage d'au moins un frein (301a-d, 306a-d) d'une roue (303a-d) si, pendant la conduite en courbe, une instabilité est reconnue pendant un intervalle de temps qui atteint un intervalle de temps de seuil.

16. Dispositif selon la revendication 15, **caractérisé en ce que** le dispositif de modification (322) abaisse la pression de freinage sur au moins une roue côté intérieur de la courbe (303a-d) et/ou la relève sur au moins une roue côté extérieur de la courbe (303a-d).

17. Dispositif selon la revendication 15 ou 16, **caractérisé en ce que** le dispositif de modification (322) abaisse les pressions de freinage sur les roues de l'essieu arrière (305).

18. Dispositif selon l'une des revendications précédentes, **caractérisé par** un dispositif de variation (323) qui fait varier la pression de freinage d'au moins un frein (301a-d, 306a-d) pendant la conduite en courbe, dans l'intervalle de temps qui s'écoule avant d'atteindre l'intervalle de temps de seuil.

19. Dispositif selon la revendication 18, **caractérisé en ce que** le dispositif de variation (323) relève la pression de freinage sur au moins une roue côté intérieur de la courbe (303a-d) et/ou l'abaisse sur au moins une roue côté extérieur de la courbe (303a-d).

20. Dispositif selon l'une des revendications précédentes, **caractérisé en ce que** le dispositif de modification (322) ne procède pas à la modification ou l'interrompt si un contre-braquage ou une conduite en courbe dans l'autre direction est reconnue.

21. Dispositif selon l'une des revendications précédentes, **caractérisé en ce que** le dispositif d'intervention (309, 310) est un système ABS, un dispositif de détermination (325) étant prévu qui détermine l'intervalle de temps de l'instabilité pendant la conduite en courbe, à l'aide des cycles de régulation du système ABS.

22. Dispositif selon la revendication 21, **caractérisé en ce que** le dispositif de détermination (325) comporte un compteur avec une indication chiffrée de repos qui, lorsqu'une conduite instable en courbe est reconnue, est incrémentée ou décrémentée suivant la direction de la courbe, une valeur de seuil supérieure et une valeur de seuil inférieure étant prévues qui forment l'intervalle de temps de seuil.

23. Dispositif selon la revendication 22, **caractérisé en ce que** l'indication de repos est le chiffre 0, une valeur de seuil est inférieure à 0 et l'autre valeur de seuil supérieure à 0.

24. Dispositif selon la revendication 22 ou 23, **caractérisé en ce que** le compteur avance jusqu'à une valeur limite supérieure ou descend jusqu'à une valeur limite inférieure, la valeur limite supérieure se situant au-dessus de la valeur de seuil supérieure et la valeur limite inférieure se situant au-dessous de la valeur de seuil inférieure.

25. Dispositif selon l'une des revendications 22 à 24, **caractérisé en ce que**, lorsqu'aucune conduite en courbe n'est reconnue, le compteur est replacé progressivement à l'indication chiffrée de repos.

26. Dispositif selon l'une des revendications 22 à 25, **caractérisé en ce que**, lorsqu'une conduite en courbe dans une direction est reconnue, qui est opposée à celle qui correspond à l'indication chiffrée du compteur, le compteur est replacé rapidement sur l'indication chiffrée de repos.

27. Dispositif selon l'une des revendications 22 à 26, **caractérisé par**
un dispositif (408) qui définit un intervalle de temps après la fin d'une conduite en courbe critique,
un dispositif de détection (409) qui conclut à un changement de direction critique si à l'intérieur de l'intervalle de temps une conduite en courbe critique dans l'autre direction est reconnue, et
un dispositif de changement (324) qui change la pression de freinage sur une ou plusieurs roues lorsqu'un changement de direction critique est reconnu.

28. Dispositif selon la revendication 27, **caractérisé en ce que** le dispositif (408) comporte un compteur dont les chiffres diminuent à partir d'une indication chiffrée initiale, l'indication chiffrée initiale étant réglée en fonction du coefficient de friction entre la roue (303a-d) et la chaussée.

29. Dispositif selon l'une des revendications précédentes, **caractérisé en ce que** le dispositif de vérification (321) comporte un dispositif de comparaison qui compare les unes aux autres les données ou valeurs des roues (303a-d) d'un essieu.

30. Dispositif selon l'une des revendications précédentes, **caractérisé en ce que** le dispositif de reconnaissance (320) comporte un dispositif de comparaison qui compare les unes aux autres les données ou valeurs des roues (303a-d) d'un essieu.

31. Dispositif selon l'une des revendications précédentes, **caractérisé en ce que** le dispositif de modification (322) et/ou le dispositif de variation (323) et/ou le dispositif de changement (324) comportent un dispositif pour modifier les valeurs de seuil utilisées pour procéder à l'action sur la pression de freinage.
